# EUROPÄISCHE PATENTSCHRIFT

(11) **EP 0 771 917 B1**
(45) Veröffentlichungstag und Bekanntmachung des Hinweises auf die Patenterteilung: **23.08.2000**
(21) Anmeldenummer: 96890168.6
(22) Anmeldetag: 28.10.1996
(51) Int. Cl.: E04H 4/00, E04H 4/12

(54) **Verfahren und Anlage zur Erwärmung von Teilen offener, stehender Gewässer**
Method and plant for heating parts of open, stagnant water
Procédé et installation pour chauffer des parties d'eau ouverteset stagnantes

(30) Priorität: 31.10.1995 AT 179895
(43) Veröffentlichungstag der Anmeldung: 07.05.1997
(73) Patentinhaber: Leeb, Ulrich Peter, 9565 Turracher Höhe 5 (AT)
(72) Erfinder: Leeb, Ulrich Peter, 9565 Turracher Höhe 5 (AT); Fellacher, Korbinian, Ing., 5580 Tamsweg (AT)
(74) Vertreter: Collin, Hans, Dipl.-Ing. Dr.

(56) Entgegenhaltungen:
- FR-A- 2 390 944
- FR-A- 2 440 450
- US-A- 3 922 732
- US-A- 4 201 495
- US-A- 4 706 307

## Beschreibung

Die Erfindung betrifft ein Verfahren und eine Anlage zur Erwärmung eines durch schwimmende Hohlkörper sowie von davon herabhängenden, vorzugsweise zumindest teilweise aus Kunststoff, z.B. Polychloropren, bestehenden, Schürzen abgegrenzten Teils eines zumindest im wesentlichen stehenden Gewässers, wobei die Erwärmung des abgegrenzten Gewässerteils mittels einer Erwärmungsquelle erfolgt, der Wasser aus dem abgegrenzten Gewässerteil zugeführt wird und nach dem Passieren der Erwärmungsquelle und dabei erfolgender Wärmezufuhr wieder an den abgegrenzten Gewässerbereich abgegeben wird, bevorzugt mittels einer Wärmepumpe, der weiters Wasser aus dem Gewässerbereich außerhalb des abgegrenzten Gewässerteils zugeleitet wird, das nach Passieren der Wärmepumpe und dabei erfolgendem Wärmeentzug wieder ins Gewässer außerhalb des abgegrenzten Gewässerteils zurückgeführt wird.

Eine solche Anlage zur Beheizung stehender Gewässer ist beispielsweise aus der US-A-3,922,732 bekannt. Diese umfaßt eine Erwärmungsquelle in Form einer Wärmepumpe zur Erwärmung eines durch schwimmende Hohlkörper sowie von davon herabhängenden Schürzen abgegrenzten Teils eines im wesentlichen stehenden Gewässers. Der Wärmepumpe wird einerseits Wasser aus dem abgegrenzten Gewässerteil zugeführt, das nach dem Passieren der Wärmepumpe und dabei erfolgender Wärmezufuhr wieder an den abgegrenzten Gewässerbereich abgegeben wird. Zusätzlich wird der Wärmepumpe Wasser aus dem Gewässerbereich außerhalb des abgegrenzten Gewässerteils zugeleitet, das nach Passieren der Wärmepumpe und dabei erfolgendem Wärmeentzug wieder ins Gewässer außerhalb des abgegrenzten Gewässerteils zurückgeführt wird.

Der Vorteil der bekannten Anlage liegt darin, daß dadurch stehende Gewässer, die aufgrund ihrer klimatischen Gegebenheiten oder ihrer Höhenlage zum Baden zu kalt wären, mit geringem Energieaufwand auf Badetemperatur erwärmt werden können und somit ein beträchtlicher Beitrag zum Ausbau des Fremdenverkehrs in vielen Gegenden geliefert wird. Problematisch bei obiger Anlage ist jedoch die Erzeugung einer gleichmäßigen Wassertemperatur im abgegrenzten Gewässerbereich bis zu einer vorgegebenen Tiefe. Die vorliegende Erfindung stellt einen Beitrag zur Lösung dieses Problems dar.

Das erfindungsgemäße Verfahren ist dadurch gekennzeichnet, daß das erwärmte Wasser dem abgegrenzten Gewässerteil unterhalb des Wasserspiegels in, insbesondere schräg abwärts gerichteten, Strahlen zugeleitet sowie auf der gegenüberliegenden Seite dieses abgegrenzten Gewässerteils Wasser abgesaugt und der Erwärmungsquelle zugeleitet wird und daß auch die Zu- und Ableitung zwischen dem abgegrenzten Gewässerteil und der Erwärmungsquelle, soweit im Gewässer befindlich, unter der Wasseroberfläche erfolgt.

Durch die, insbesondere schräge, Einspritzung des erwärmten Wassers in den abgetrennten Gewässerbereich erfolgt eine gute Durchmischung des Wassers. Da auch die Zuleitung des Warmwassers zum abgetrennten Bereich unterhalb der Wasseroberfläche erfolgt, findet man im wesentlichen konstante Temperaturverhältnisse vor, die sich - anders als bei einer Leitungsführung an der Oberfläche - nur im Langzeitbereich ändern. Man kann damit die Wassertemperatur sehr präzise regeln.

Dies geschieht vorzugsweise dadurch, daß die, insbesondere abwärts gerichteten, Wasserstrahlen bezüglich Geschwindigkeit, Druck bzw. Intensität, Menge und bzw. oder Temperatur geregelt werden.

Eine bevorzugte Variante des erfindungsgemäßen Verfahrens besteht darin, daß das außerhalb des abgegrenzten Gewässerteils entnommene und dorthin rückgeführte Wasser sowie das innerhalb dieses Gewässerteils zugeführte und entnommene Wasser in getrennten Kreisen über Wärmetauscher der Wärmepumpe geführt werden, wo über einen über die vorerwähnten Wärmetauscher geführten Kreis eines Wärmepumpenmediums ("Kältemittel") die Wärmeübertragung stattfindet, in dem sich Verdampfer, Verdichter, Verflüssiger und Expansionsventil befinden. Bei dieser energiesparenden Variante werden ca. 80% der benötigten Heizenergie dem Gewässer entnommen und nur ca. 20% an elektrischer Energie für den Betrieb der Wärmepumpe benötigt.

Die benötigte elektrische Energie kann weiter verringert werden, wenn die Erwärmung des Wassers zumindest teilweise mittels Sonnenkollektoren erfolgt. Zusätzlich ist auch der Einsatz von Solarzellen zum Betrieb der Wärmepumpe mit Solarstrom denkbar.

In einer Ausgestaltung der Erfindung ist vorgesehen, daß die Temperatur des abgetrennten Gewässerteils durch die Regulierung der Menge des sich im Kreislauf zur Erwärmung des abgegrenzten Gewässerteils befindlichen Wassers gesteuert wird.

Eine zweckmäßige Fortbildung der Erfindung ist dadurch gekennzeichnet, daß dem abgegrenzten Gewässerteil bzw. dem Wasserkreislauf zur Erwärmung des abgegrenzten Gewässerteils zusätzlich Wasser von außerhalb der Abgrenzung zugeführt wird. Dies ist einerseits für die Wasserqualität und Verhinderung von Algenbildung im abgegrenzten Bereich wichtig und andererseits kann damit die Tiefe der durchwärmten Schicht gesteuert werden.

Die Erfindung betrifft aber auch eine Anlage zur Erwärmung eines durch schwimmende Hohlkörper sowie von davon herabhängenden Schürzen abgegrenzten Teils eines zumindest im wesentlichen stehenden Gewässers. Diese Anlage ist dadurch gekennzeichnet, daß erwärmtes Wasser durch unterhalb von schwimmfähigen, insbesondere luftgefüllten und mit geschlossenem, vorzugsweise etwa rechteckigem, Querschnitt ausgestatteten, Haupthohlkörpern angeordnete Zusatzhohlkörper mit geschlossenem, vorzugsweise etwa rechteckigem, Querschnitt geleitet ist, wobei an der dem Innern des abgegrenzten Gewässerteils zugewandten Seite der Zusatzhohlkörper, vorzugsweise der inneren unteren Kante der etwa quaderförmigen Zusatzhohlkörper, Austrittsöffnungen für das erwärmte Wasser und Eintrittsöffnungen für das der Wärmepumpe zuzuleitende Wasser vorgesehen sind sowie versteifte bzw. beschwerte Schürzen an den bezüglich des abgegrenzten Gewässerteils außenliegenden Seiten der Zusatzhohlkörper sowie der Haupthohlkörper befestigt sind.

Eine bevorzugte Ausführungsform der Anlage ist dadurch gekennzeichnet, daß die Austrittsöffnungen an schräg abwärts gerichteten Kanälen vorgesehen sind, die insbesondere einen Winkel von 30° bis 60°, bevorzugt 45°, mit der Waagrechten einschließen. Diese Werte der Winkel erwiesen sich zur möglichst gleichmäßigen Wasserdurchmischung im abgegrenzten Bereich als am besten geeignet.

Es erweist sich als besonders zweckmäßig, wenn Druck bzw. Intensität, Geschwindigkeit, Menge und bzw. oder Temperatur des von der Erwärmungsquelle, insbesondere Wärmepumpe, zufließenden Wassers, insbesondere im bzw. für den Bereich der Austrittsöffnungen des erwärmten Wassers an den Zusatzhohlkörpern, regelbar sind.

In vielen Fällen wäre es wünschenswert, die Größe der Fläche des abgegrenzten Bereichs verändern zu können, beispielsweise um die Wasserfläche und damit den Heizenergiebedarf nach der Anzahl der Badegäste oder der Wasser- bzw. Lufttemperatur variieren zu können. Dies wird erfindungsgemäß dadurch ermöglicht, daß der von der Erwärmungsquelle, insbesondere vom Wärmepumpenanschluß, abliegende Teil der aus Haupt- und Zusatzhohlkörpern bzw. -teilen bestehenden Abgrenzung mobil, insbesondere entlang der Achsen von entlang der Längsseiten einer etwa rechteckigen Abgrenzung angeordneten Haupt- und Zusatzhohlkörpern verschiebbar ausgebildet ist.

Ein weiterer erfindungsgemäßer Ansatz zur Variierung der Fläche des abgegrenzten Gewässerbereichs ist dadurch gekennzeichnet, daß die aus Haupt- und Zusatzhohlkörpern bzw. -teilen bestehende Abgrenzung durch an gegenüberliegenden Hohlkörpern einhängbare Schürzen aus wärmeisolierendem Material, insbesondere Kunststoff, z.B. Polychloropren, abtrennbar ist.

Um selektiv nur einen Teil des abgegrenzten Gewässerbereichs zu erwärmen, können zur Verhinderung des Wasserdurchflusses die Zusatzhohlkörper mit Drosselklappen ausgestattet sein.

Auch stehende Gewässer unterliegen einer ständigen Veränderung der Höhe des Wasserspiegels. Damit diese Veränderungen nicht zu Schäden in den Rohrleitungen zu den Hohlkörpern führen, ist erfindungsgemäß vorgesehen, daß der Anschluß der Zusatzhohlkörper an den Warmwasserzufluß bzw. Abfluß im stehenden Gewässer aus flexiblen Rohrleitungen besteht.

Da der Einsatz der Anlage oftmals in Gewässern erfolgen wird, die im Winter zufrieren, müssen für diese Zeit besondere Vorkehrungen zum Schutz der Anlage gegen die Eineisung getroffen werden. Eine - allerdings mühsame - Lösung wäre der Abbau der Anlage im Herbst. Die Erfindung bietet eine wesentlich elegantere Lösung des Problems an, indem abgeteilte Luftkammern in den Haupthohlkörpern Entlüftungsöffnungen und Entleerungsöffnungen aufweisen. Dadurch ist es möglich, die abgeteilten Luftkammern zu fluten und so die gesamte Anlage bis auf eine gewünschte Tiefe unterhalb der Eisgrenze im Gewässer zu versenken. Nachdem im Frühjahr die Eisdecke geschmolzen ist, wird die Anlage durch Ausblasen des Wassers aus den Luftkammern wieder an die Gewässeroberfläche gehoben.

Es hat sich gezeigt, daß durch die Erwärmung des abgegrenzten Gewässerbereichs dessen Wasserspiegel gegenüber dem des Außenbereichs geringfügig ansteigt. Da die Haupthohlkörper untereinander meist nicht flüssigkeitsdicht verbunden sind, aber aus Energiespargründen trotzdem ein Auslaufen des erwärmten Wassers in den Außenbereich vermieden werden soll, ist in einer Ausgestaltung der Erfindung vorgesehen, daß die Befestigung der Schürzen an den Hohlkörpern oberhalb der Wasserlinie erfolgt.

Eine zusätzliche erfindungsgemäße Maßnahme zur Verringerung der benötigten Heizenergie besteht darin, zu Zeiten, in denen der erwärmte Wasserbereich nicht von Badegästen frequentiert wird, die Oberfläche des abgegrenzten Bereichs mittels einer, insbesondere elektrisch ausfahrbaren, Oberflächenabdeckung abzudecken.

Zur Entfernung von Wasserverunreinigungen, wie Blättern, treibenden Insekten etc., die aufgrund der Absperrung ohne Zusatzmaßnahmen im abgegrenzten Berich verbleiben würden, ist es zweckmäßig, daß zu ihrer Absaugung eine Reinigungspumpe (Skimmer) vorgesehen ist.

Die Erfindung wird nun unter Bezugnahme auf die beiliegenden Zeichnungen anhand eines Ausführungsbeispiels näher beschrieben.

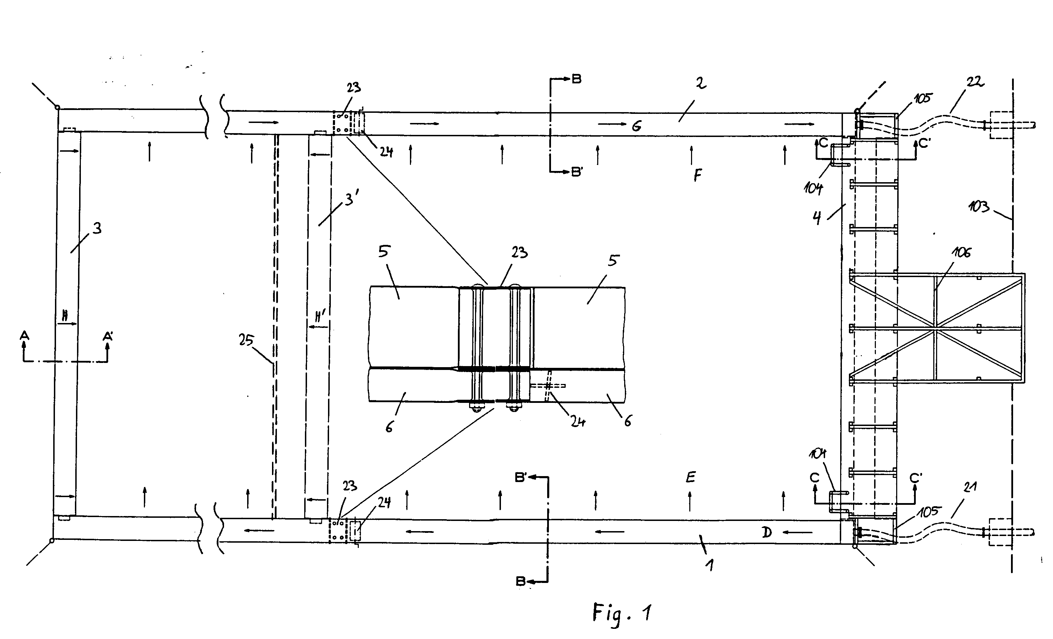

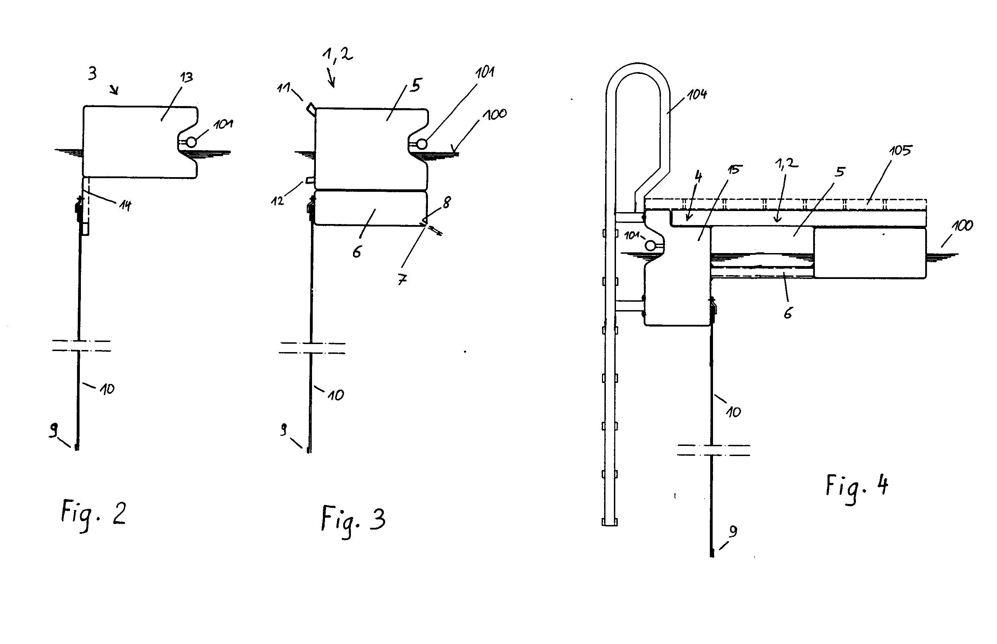

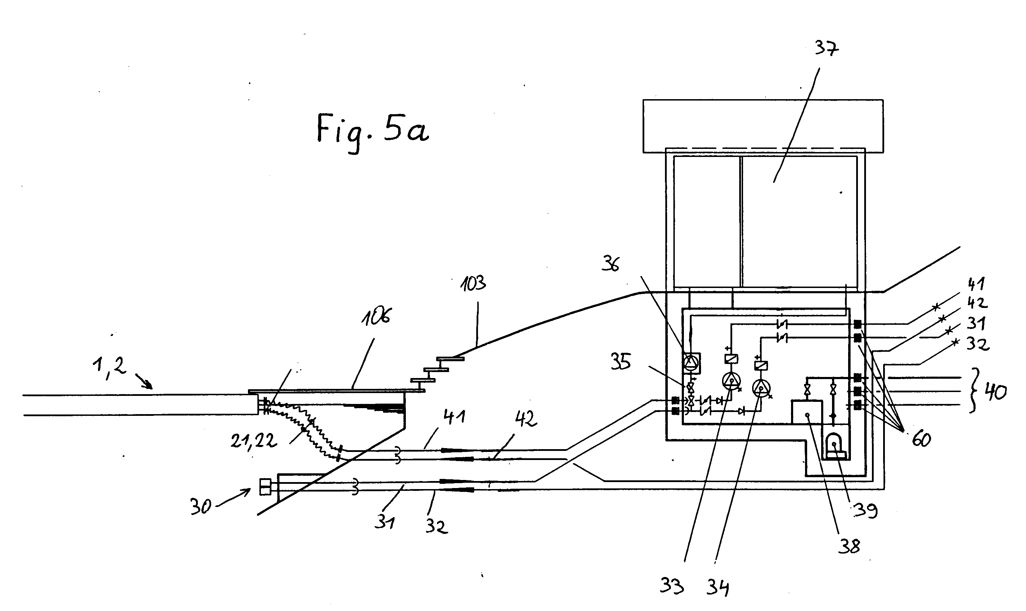

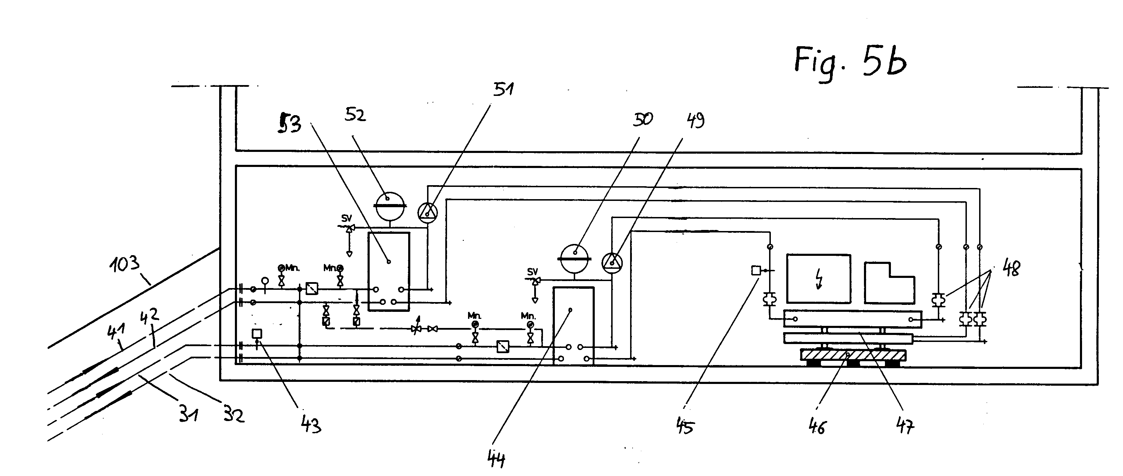

Dabei zeigen Fig.1 eine erfindungsgemäße Anlage zur Erwärmung eines durch schwimmende Hohlkörper sowie von davon herabhängenden Schürzen abgegrenzten Gewässerteils in Draufsicht, Fig.2 einen Schnitt entlang Linie A-A' in Fig.1, Fig.3 einen Schnitt entlang Linie B-B' in Fig.1, Fig.4 einen Schnitt entlang Linie C-C' in Fig.1 und die Figuren 5a und 5b ein Schema des Gesamtaufbaus der Anlage.

Unter Bezugnahme auf die Figuren 1 bis 4 wird zunächst der im Wasser befindliche Teil der erfindungsgemäßen Anlage erklärt. Ein Teil eines stehenden Gewässers ist durch eine rechteckige Anordnung aus miteinander verbundenen Schwimmkörpern, die im folgenden auch als Pontons 1,2,3,4 bezeichnet werden, abgetrennt. Diese Pontons weisen allgemein zwei unterschiedliche Konfigurierungen auf. Die Pontons 1,2 an den Längsseiten der Abgrenzung bestehen jeweils aus Haupthohlkörpern 5 und darunter angebrachten Zusatzhohlkörpern 6 (siehe Fig.3) mit allgemein rechteckigem Querschnitt, wobei die Haupthohlkörper eine Einziehung aufweisen, in der eine Haltestange 101 verläuft. Haupt- und Zusatzhohlkörper stehen nicht miteinander in Fluidkommunikation. Die Haupthohlkörper 5 sind luftgefüllt und dienen als Auftriebskörper; sie ragen somit teilweise über die Wasseroberfläche 100 hinaus. Die Zusatzhohlkörper 6 dienen zur Zuleitung erwärmten Wassers in den abgesperrten Bereich und zur Ableitung von Wasser aus diesem Bereich zur erneuten Erwärmung. Dazu sind die Zusatzhohlkörper 6 in regelmäßigen Abständen an der dem Innern des abgegrenzten Gewässerteils zugewandten Seite, im speziellen Fall an der inneren unteren Kante, mit Öffnungen 7 versehen, die einerseits als Austrittsöffnungen für das erwärmte Wasser und andererseits als Eintrittsöffnungen für das der Erwärmungsquelle zuzuleitende Wasser dienen. Die Öffnungen 7 wiederum sind an schräg abwärts gerichteten Kanälen 8 vorgesehen, die einen Winkel von 30° bis 60°, bevorzugt 45°, mit der Waagrechten einschließen. Durch die so erfolgende schräge Einströmung des erwärmten Wassers wird eine ausgezeichnete Durchmischung im abgetrennten Gewässerbereich erzielt. Weiters sind versteifte bzw. durch Gewichte 9 beschwerte Schürzen 10 aus wärmeisolierendem Material an den bezüglich des abgegrenzten Gewässerteils außenliegenden Seiten der Zusatzhohlkörper sowie der Haupthohlkörper befestigt. In den Figuren ist die Befestigung der Schürzen 10 unterhalb der Wasserlinie 100 dargestellt, doch kann diese vorteilhaft auch oberhalb der Wasserlinie 100 erfolgen. Ob die Öffnungen 7 als Einström- oder Ausströmöffnungen wirken, hängt ausschließlich von der Strömungsrichtung des Wassers in den Zusatzhohlkörpern ab. In Fig.1 strömt erwärmtes Wasser in Richtung der Pfeile D in die Zusatzhohlkörper der Pontons 1 und aus diesen in Pfeilrichtung E in den abgegrenzten Gewässerbereich. Gleichzeitig wird an der gegenüberliegenden Seite der Abgrenzung Wasser in Richtung des Pfeils F durch die Öffnungen in die Pontons 2 gezogen und fließt in den zugehörigen Zusatzhohlkörpern in Pfeilrichtung G zu einer nicht dargestellten Erwärmungsquelle ab.

Die Zusatzhohlkörper der beiden Pontons 1,2 sind mit flexiblen Rohrleitungen 21,22 mit dem Kreislauf der Erwärmungsquelle verbunden, sodaß Schwankungen der Pontons ausgeglichen werden. Diese Rohrleitungen verlaufen unter der Wasseroberfläche 100, ebenso wie sich die Zusatzhohlkörper zur Gänze unter dem Wasserspiegel befinden.

Die Regelung der Temperatur des abgetrennten Gewässerbereichs erfolgt dabei wahlweise durch Regelung von Druck bzw. Intensität, Geschwindigkeit, Menge und bzw. oder Temperatur des von der Erwärmungsquelle, insbesondere Wärmepumpe, zufließenden Wassers.

Die an der Querseite der Absperrung befindlichen Pontons 3 und 4 bestehen nur aus Haupthohlkörpern ohne warmwassertransportierende Zusatzhohlkörper. Der Ponton 3 an der dem Ufer 103 abgewandten Querseite besteht, wie im Schnitt in Fig.2 zu sehen, aus einem Haupthohlkörper 13 mit etwa rechteckigem Querschnitt, an dessen einer Seite eine Haltestange 101 befestigt ist. Die Schürze 10 mit der Beschwerung 9 ist an einem Fortsatz 14 des Haupthohlkörpers 13 angebracht.

Der Ponton 4 an der ufernahen Schmalseite der Absperrung besteht, wie in Fig.4 gezeigt, aus einem luftgefüllten Haupthohlkörper 15, an dem wiederum eine Haltestange 101 und die Schürze 10 mit Beschwerungsgewicht 9 befestigt ist. Weiters ist am Haupthohlkörper 15 noch eine Leiter 104 befestigt. Über einen Verbindungsrahmen 105 ist der Ponton 4 mit den Pontons 1 und 2, bestehend aus den Haupthohlkörpern 5 und Zusatzhohlkörpern 6 verbunden. Er ragt teilweise aus dem Wasser, wie an der Wasserlinie 100 ersichtlich. Ein Steg 106 verbindet den Ponton 104 mit dem Ufer 103.

Um die Pontons im Winter im Wasser versenken zu können, weisen sowohl die längsseitigen, als auch querseitigen Haupthohlkörper 5,13,15 absperrbare Entlüftungsöffnungen 11 und Entleerungsöffnungen 12 auf. Aus Anschaulichkeitsgründen sind die Öffnungen 11 und 12 nur in Fig.3 am Hohlkörper 5 eingezeichnet. Es versteht sich jedoch, daß alle luftgefüllten Hohlkörper mit solchen Öffnungen ausgestattet sein können.

In Fig.1 ist in der Mitte ein Detail der Verbindung von Teilen der Pontons 1,2 vergrößert dargestellt. Dabei sind zwei Haupthohlkörper 5, die miteinander nicht in Fluidkommunikation stehen, und zwei in Fluidkommunikation stehende Zusatzhohlkörper 6 durch ein Verbindungsstück 23 starr aneinander befestigt. Man erkennt, daß die Zusatzhohlkörper 6 durch Drosselklappen 24 absperrbar sind.

Der Ponton 3 ist in Richtung des Pfeils H verschiebbar, bis er die strichliert angedeutete Stellung 3' erreicht, aus der er in Pfeilrichtung H' wieder in seine Ausgangsstellung bewegt werden kann. Durch die Verschiebbarkeit des Pontons 3 kann die Größe des abgegrenzten und somit die Größe des beheizten Gewässerbereichs variiert werden.

Ein weiterer Ansatz, die Größe des abgetrennten Bereichs zu variieren, besteht darin, eine zusätzliche Schürze 25 zwischen den Pontons 1und 2 einzuhängen, wie in Fig.1 strichliert dargestellt.

Der Aufbau der Absperrung wird durch eine ausziehbare Abdeckung der Oberfläche, die vorzugsweise elektrisch betrieben wird und eine Reinigungspumpe (Skimmer) zur Absaugung von Oberflächenverunreinigungen vervollständigt.

Die Wirkungsweise der Gesamtanlage wird nun anhand eines in den Fig. 5a und 5b dargestellten Aufbaus diskutiert. Diese Anlage wurde an einem Gebirgssee in 1730 m Seehöhe errichtet, der auch im Sommer nur eine Temperatur von ca. 17° C erreicht. Die Fläche des Sees beträgt ca. 194000 m², sein Volumen 2,6 Millionen m³. Die Fläche der Abgrenzung beträgt 10 x 25 m, das beheizte Volumen 375 m³. An einer Entnahmestelle 30 wird dem See in ca. 1m Tiefe Wasser entnommen, das im Sommer eine Temperatur von ca. 15 bis 16° C aufweist. Dieses Wasser wird über eine Rohrleitung 31 zu einer Umwälzpumpe 34 geführt, von wo das Seewasser weiter zu einem Wärmetauscher 44 gepumpt wird, der mit dem Verdampfungskühlkreislauf der Wärmepumpe 47 kommuniziert. Vom Wärmetauscher 44 gelangt das auf 12 bis 13° C abgekühlte Seewasser über die Rohrleitung 32 wieder zurück in den See. Die Seewasserleitung 31 steht weiters über einen Schmutzfänger 35 mit einer Kleinhaus-Wasseranlage 36 in Verbindung, die Frischwasser in die Duschkabine 37 pumpt. Das beim Duschen verbrauchte warme Wasser kann über einen Wärmetauscher gleichfalls zur Erwärmung des See-Badewassers dienen. Da dieser Teil der Anlage jedoch nicht zur Erfindung gehört, wird darauf nicht näher eingegangen, ebensowenig, wie auf die im Fundament der Duschkabine 37 angeordnete Entwässerungspumpe 39, Hebeanlage 38 und damit verbundenen Abwasserleitungen 40. Alle Leitungsdurchführungen aus dem Fundament des Gebäudes 37 sind als Dichtdurchführungen 60 konzipiert.

Die Zusatzhohlkörper in den Pontons 1 und 2 sind über flexible Leitungen 21,22 mit Rohrleitungen 41,42 verbunden, die das Wasser zum und vom abgegrenzten Bereich transportieren. Dieses Wasser wird im folgenden als Beckenwasser bezeichnet. Das aus dem abgesperrten Bereich abgesaugte Beckenwasser gelangt über die Rohrleitung 41 zu einer Umwälzpumpe 33, von wo es weiter zu einem Wärmetauscher 53 gepumpt wird, der mit dem Kondensatorheizkreislauf der Wärmepumpe 47 kommuniziert. Vom Wärmetauscher 44 gelangt das auf 25 bis 27° C erwärmte Beckenwasser wieder über eine Rohrleitung 42 in die Zusatzhohlkörper und von da in den abgetrennten Gewässerbereich. Die Rohrleitung 41 steht mit der Wasseranlage 36 über ein Ventil und den Schmutzfänger 35 ebenfalls in Kommunikation.

Das Prinzip einer Wärmepumpe ist Fachleuten allgemein bekannt und muß daher nicht näher erläutert werden. Es genügt, darauf hinzuweisen, daß das Kältemittel im Kondensatorheizkreis bzw. im Verdampferkühlkreis durch Umwälzpumpen 51 bzw. 49 zur Wärmepumpe 47 transportiert wird, die auf einer Betonplatte 46 ruht. Gummikompensatoren 48 nehmen die durch Temperaturdifferenzen entstehenden Rohrdehnungsspannungen auf. Aus Sicherheitsgründen sind an den Wärmetauschern 44 und 53 Ausdehnungsgefäße 50 bzw. 52 und im Seewasserkreislauf bzw. im Verdampferkühlkreislauf Strömungswächter 43 bzw. 45 vorgesehen.

Weiters wäre die Anlage mit einer Sonnenkollektorheizung erweiterbar, die zu einer weiteren Verringerung der benötigten elektrischen Energie führen würde.

Zusätzlich zum erwärmten Beckenwasser kann dem abgegrenzten Gewässerbereich auch Frischwasser vom Außenbereich zugeführt werden. Da praktisch das gesamte Leitungssystem unter der Wasser- bzw. Erdoberfläche bzw. in umbauten Räumen geführt ist, hat man es mit stabilen Temperaturbedingungen zu tun, die eine exakte Regelung der Beckenwassertemperatur ermöglichen. Durch die Einspritzung des erwärmten Wassers schräg nach unten in den abgegrenzten Bereich erfolgt eine sehr gleichmäßige Wasserdurchmischung.

Es wurden auch bakteriologische und chemische Wasseruntersuchungen mit Vergleichsproben innerhalb und außerhalb der Absperrung durchgeführt, wobei keinerlei Unterschied in der Wasserqualität feststellbar war. Dieses Ergebnis war schon deshalb erwartet worden, da das erwärmte Wasservolumen nur 0,0014% des Seevolumens ausmachte.

Durch die gute Wärmeisolierung der abhängenden Schürzen beträgt die Temperaturdifferenz zwischen einer Messung direkt an der Außenseite der Schürzen und einen Meter davon entfernt im Außenbereich der Absperrung nur 0,2 bis 0,3° C.

## Patentansprüche

1. Verfahren zur Erwärmung eines durch schwimmende Hohlkörper sowie von davon herabhängenden, vorzugsweise zumindest teilweise aus Kunststoff, z.B. Polychloropren, bestehenden, Schürzen abgegrenzten Teils eines zumindest im wesentlichen stehenden Gewässers, wobei die Erwärmung des abgegrenzten Gewässerteils mittels einer Erwärmungsquelle erfolgt, der Wasser aus dem abgegrenzten Gewässerteil zugeführt wird und nach dem Passieren der Erwärmungsquelle und dabei erfolgender Wärmezufuhr wieder an den abgegrenzten Gewässerbereich abgegeben wird, bevorzugt mittels einer Wärmepumpe, der weiters Wasser aus dem Gewässerbereich außerhalb des abgegrenzten Gewässerteils zugeleitet wird, das nach Passieren der Wärmepumpe und dabei erfolgendem Wärmeentzug wieder ins Gewässer außerhalb des abgegrenzten Gewässerteils zurückgeführt wird, dadurch gekennzeichnet, daß das erwärmte Wasser dem abgegrenzten Gewässerteil unterhalb des Wasserspiegels in, insbesondere schräg abwärts gerichteten, Strahlen zugeleitet sowie auf der gegenüberliegenden Seite dieses abgegrenzten Gewässerteils Wasser abgesaugt und der Erwärmungsquelle zugeleitet wird und daß auch die Zu- und Ableitung zwischen dem abgegrenzten Gewässerteil und der Erwärmungsquelle, soweit im Gewässer befindlich, unter der Wasseroberfläche erfolgt.

2. Verfahren nach Anspruch 1, dadurch gekennzeichnet, daß die, insbesondere abwärts gerichteten, Wasserstrahlen bezüglich Geschwindigkeit, Druck bzw. Intensität, Menge und bzw. oder Temperatur geregelt werden.

3. Verfahren nach Anspruch 1 oder 2, dadurch gekennzeichnet, daß das außerhalb des abgegrenzten Gewässerteils entnommene und dorthin rückgeführte Wasser sowie das innerhalb dieses Gewässerteils zugeführte und entnommene Wasser in getrennten Kreisen über Wärmetauscher der Wärmepumpe geführt werden, wo über einen über die vorerwähnten Wärmetauscher geführten Kreis eines Wärmepumpenmediums ("Kältemittel") die Wärmeübertragung stattfindet, in dem sich Verdampfer, Verdichter, Verflüssiger und Expansionsventil befinden.

4. Verfahren nach Anspruch 1, dadurch gekennzeichnet, daß die Erwärmung des Wassers zumindest teilweise mittels Sonnenkollektoren erfolgt.

5. Verfahren nach Anspruch 1 bis 4, dadurch gekennzeichnet, daß die Menge des sich im Kreislauf zur Erwärmung des abgegrenzten Gewässerteils befindlichen Wassers reguliert wird.

6. Verfahren nach Anspruch 1 bis 5, dadurch gekennzeichnet, daß dem abgegrenzten Gewässerteil bzw. dem Wasserkreislauf zur Erwärmung des abgegrenzten Gewässerteils zusätzlich Wasser von außerhalb der Abgrenzung zugeführt wird.

7. Anlage zur Erwärmung eines durch schwimmende Hohlkörper sowie von davon herabhängenden, vorzugsweise zumindest teilweise aus Kunststoff, z.B. Polychloropren, bestehenden, Schürzen abgegrenzten Teils eines zumindest im wesentlichen stehenden Gewässers, wobei die Erwärmung des abgegrenzten Gewässerteils mittels einer Erwärmungsquelle erfolgt, der Wasser aus dem abgegrenzten Gewässerteil zugeführt ist und nach dem Passieren der Erwärmungsquelle und dabei erfolgender Wärmezufuhr wieder in den abgegrenzten Gewässerbereich zugeführt ist, bevorzugt mittels einer Wärmepumpe, der weiters Wasser aus dem Gewässerbereich außerhalb des abgegrenzten Gewässerteils zugeleitet ist, das nach Passieren der Wärmepumpe und dabei erfolgendem Wärmeentzug wieder ins Gewässer außerhalb des abgegrenzten Gewässerteils zurückgeführt ist, dadurch gekennzeichnet, daß erwärmtes Wasser durch unterhalb von schwimmfähigen, insbesondere luftgefüllten und mit geschlossenem, vorzugsweise etwa rechteckigem, Querschnitt ausgestatteten, Haupthohlkörpern (5) angeordnete Zusatzhohlkörper (6) mit geschlossenem, vorzugsweise etwa rechteckigem, Querschnitt geleitet ist, wobei an der dem Innern des abgegrenzten Gewässerteils zugewandten Seite der Zusatzhohlkörper (6), vorzugsweise der inneren unteren Kante der etwa quaderförmigen Zusatzhohlkörper (6), Austrittsöffnungen (7) für das erwärmte Wasser (Pfeil E) und Eintrittsöffnungen für das der Erwärmungsquelle zuzuleitende Wasser (Pfeil F) vorgesehen sind sowie versteifte bzw. beschwerte Schürzen (10) an den bezüglich des abgegrenzten Gewässerteils außenliegenden Seiten der Zusatzhohlkörper (6) sowie der Haupthohlkörper (5) befestigt sind. (insb. Fig. 3)

8. Anlage nach Anspruch 7, dadurch gekennzeichnet, daß die Austrittsöffnungen (7) an schräg abwärts gerichteten Kanälen (8) vorgesehen sind, die insbesondere einen Winkel von 30° bis 60°, bevorzugt 45°, mit der Waagrechten einschließen.

9. Anlage nach Anspruch 7 oder 8, dadurch gekennzeichnet, daß Druck bzw. Intensität, Geschwindigkeit, Menge und bzw. oder Temperatur des von der Erwärmungsquelle, insbesondere Wärmepumpe (47), zufließenden Wassers (Pfeil D), insbesondere im bzw. für den Bereich der Austrittsöffnungen (7) des erwärmten Wassers an den Zusatzhohlkörpern (6), regelbar sind. (Fig. 1)

10. Anlage nach Anspruch 7 bis 9, dadurch gekennzeichnet, daß der von der Erwärmungsquelle, insbesondere vom Wärmepumpenanschluß, abliegende Teil (3,3') der aus Haupt- und Zusatzhohlkörpern bzw. -teilen bestehenden Abgrenzung (1,2,3,4) mobil, insbesondere entlang der Achsen von entlang der Längsseiten (1,2) einer etwa rechteckigen Abgrenzung angeordneten Haupt- und Zusatzhohlkörpern (5,6) verschiebbar ausgebildet ist. (Fig. 1)

11. Anlage nach Anspruch 7 bis 10, dadurch gekennzeichnet, daß die aus Haupt- und Zusatzhohlkörpern (5,6) bzw. -teilen bestehende Abgrenzung durch an gegenüberliegenden Hohlkörpern (1,2) einhängbare Schürzen (25) aus wärmeisolierendem Material, insbesondere Kunststoff, z.B. Polychloropren, abtrennbar ist. (Fig. 1)

12. Anlage nach Anspruch 7 bis 11, dadurch gekennzeichnet, daß zur Verhinderung des Wasserdurchflusses die Zusatzhohlkörper (6) mit Drosselklappen (24) ausgestattet sind.

13. Anlage nach Anspruch 7 bis 12, dadurch gekennzeichnet, daß der Anschluß der Zusatzhohlkörper (6) an den Warmwasserzufluß (42) bzw. Abfluß (41) im stehenden Gewässer aus flexiblen Rohrleitungen (21,22) besteht.

14. Anlage nach Anspruch 7 bis 13, dadurch gekennzeichnet, daß abgeteilte Luftkammern (5,13,15) in den Haupthohlkörpern Entlüftungsöffnungen (11) und Entleerungsöffnungen (12) aufweisen. (Fig. 3)

15. Anlage nach Anspruch 7 bis 14, dadurch gekennzeichnet, daß die Befestigung der Schürzen (10) an den Hohlkörpern oberhalb der Wasserlinie (100) erfolgt.

16. Anlage nach Anspruch 7 bis 15, dadurch gekennzeichnet, daß eine, insbesondere elektrisch ausfahrbare, Oberflächenabdeckung des abgegrenzten Gewässerbereichs vorgesehen ist.

17. Anlage nach Anspruch 7 bis 16, dadurch gekennzeichnet, daß zur Absaugung von Wasserverunreinigungen eine Reinigungspumpe (Skimmer) vorgesehen ist.

## Claims

1. A process for heating a part of an at least substantially stagnant body of water, impounded by floating hollow bodies as well as by skirts preferably at least partly made of plastics, e.g. polychloroprene, suspended therefrom, heating of the impounded part of the body of water being by means of a heating source which is supplied with water from the impounded part of the body of water, which water is recirculated to the impounded part of the body of water after passing through the heating source and being heated in the course of this, preferably by means of a heat pump to which furthermore water is fed from the region of the body of water outside the impounded part of the body of water, which water is recirculated to the body of water outside the impounded part of the body of water after passing through the heat pump and heat withdrawal in the course of this, characterised in that the heated water is fed to the impounded part of the body of water below the water surface as jets which are preferably downwardly sloping, and in that water is sucked off on the opposite side of this impounded part of the body of water and fed to the heating source, and in that the portions of the feeding and return lines between the impounded part of the body of water and the heating source, which are present in the body of water, are arranged below the water surface as well.

2. The process according to claim 1, characterised in that the water jets, which are preferably downwardly sloping, are controlled as to their speed, pressure or intensity, amount and/or temperature.

3. The process according to claim 1 or 2, characterised in that the water taken out outside the impounded part of the body of water and recycled thereto, and the water fed and taken out inside this part of the body of water are led in separate circuits via heat exchangers of the heat pump, where heat transfer takes place via a circuit of a heat pump medium ("refrigerant") passed via said heat exchangers, which comprises an evaporator, a compressor, a condenser and an expansion valve.

4. The process according to claim 1, characterised in that heating of the water is done at least partly by means of solar collectors.

5. The process according to any of claims 1 to 4, characterised in that the amount of water present in the circuit for heating the impounded part of the body of water is controlled.

6. The process according to any of claims 1 to 5, characterised in that additional water from outside the impounding device is fed to the impounded part of the body of water or to the water circuit for heating the impounded part of the body of water.

7. An installation for heating a part of an at least substantially stagnant body of water, impounded by floating hollow bodies as well as by skirts preferably at least partly made of plastics, e.g. polychloroprene, suspended therefrom, heating of the impounded part of the body of water being by means of a heating source which is supplied with water from the impounded part of the body of water, which water is recirculated to the impounded part of the body of water after passing through the heating source and being heated in the course of this, preferably by means of a heat pump to which furthermore water is fed from the region of the body of water outside the impounded part of the body of water, which water is recirculated to the body of water outside the impounded part of the body of water after passing through the heat pump and heat withdrawal in the course of this, characterised in that heated water is directed through additional hollow bodies (6) of closed, preferably approximately rectangular cross-section, arranged below floating, in particular air-filled main hollow bodies (5) of closed, preferably about rectangular cross-section, exit openings (7) for the heated water (arrow E) and entrance openings for the water to be fed to the heating source (arrow F) being arranged on that side of the additional hollow bodies (6) facing towards the interior of the impounded part of the body of water, preferably the inner lower edge of the additional hollow bodies (6) of approximately parallelepiped shape, and stiffened or weighted skirts (10) being attached to those sides of the additional hollow bodies (6) as well as of the main hollow bodies (5) external with respect to the impounded part of the body of water, (see in particular figure 3.)

8. The installation according to claim 7, characterised in that the exit openings (7) are provided at downwardly sloping channels (8), in particular forming an angle of 30° to 60°, preferably 45°, with the horizontal line.

9. The installation according to claim 7 or 8, characterised in that pressure or intensity, speed, amount and/or temperature of the water (arrow D) fed in from the heating source, in particular heat pump (47), in particular in and for the region of the exit openings (7) of the heated water in the additional hollow bodies (6), respectively, may be controlled. (Fig. 1.)

10. The installation according to any of claims 7 to 9, characterised in that the portion (3,3') of the impounding device (1,2,3,4) consisting of main and additional hollow bodies or parts facing away from the heating source, in particular from the heat pump connection, is formed mobile, in particular displaceable along the axes of main and additional hollow bodies (5, 6) arranged along the longer sides (1,2) of an approximately rectangular impounding device. (Fig. 1.)

11. The installation according to any of claims 7 to 10, characterised in that the impounding device consisting of main and additional hollow bodies (5,6) or parts is separable by means of skirts (25) of heat insulating material, in particular plastics, e.g. polychloroprene, which may be suspended from opposing hollow bodies (1,2). (Fig. 1.)

12. The installation according to any of claims 7 to 11, characterised in that the additional hollow bodies (6) are provided with throttle valves (24) for preventing the flowing-through of water.

13. The installation according to any of claims 7 to 12, characterised in that the connection between the additional hollow bodies (6) and the supply (42) and return (41), respectively, of warm water in the stagnant body of water consists of flexible tubes (21,22).

14. The installation according to any of claims 7 to 13, characterised in that separated air chambers (5, 13, 15) in the main hollow bodies are provided with vents (11) and evacuation openings (12). (Fig. 3.)

15. The installation according to any of claims 7 to 14, characterised in that the skirts (10) are attached at the hollow bodies above the water line (100).

16. The installation according to any of claims 7 to 15, characterised in that provision is made for a surface cover for the impounded part of the body of water, which may in particular be extended by electrical means.

17. The installation according to any of claims 7 to 16, characterised in that a cleaning pump (skimmer) is provided for sucking off impurities in the water.

## Revendications

1. Procédé de réchauffage d'une zone d'une masse d'eau au moins essentiellement stationnaire, zone définie par des corps creux flottants aussi bien que par des jupes y suspendues, préférablement au moins partiellement constituées en matière plastique, par exemple en polychloroprène, le réchauffage de la zone définie de la masse d'eau s'effectuant au moyen d'une source de chaleur, à laquelle de l'eau venant de la zone définie de la masse d'eau est amenée, cette eau étant retournée à la zone définie de la masse d'eau après avoir passée la source de chaleur en étant réchauffée, préférablement au moyen d'une pompe de chaleur, qui est de plus alimentée d'eau venant de la zone de la masse d'eau à l'extérieur de la zone définie de la masse d'eau, cette eau étant retournée dans la masse d'eau à l'extérieur de la zone définie après avoir passée la pompe de chaleur en soutirant de la chaleur, caractérisé en ce que l'eau réchauffée est amenée à la zone définie de la masse d'eau au-dessous de la surface de l'eau sous forme de jets, en particulier dirigés obliquement en bas, et en ce que de l'eau est aspirée au côté opposé de cette zone définie de la masse d'eau et amenée à la source de chaleur, et en ce que les parties des conduites d'amenée et de dérivation entre la zone définie de la masse d'eau et la source de chaleur situées dans la masse d'eau sont arrangées au-dessous de la surface d'eau aussi.

2. Le procédé selon la revendication 1, caractérisé en ce que les jets d'eau, en particulier dirigés obliquement en bas, sont réglés en ce qui concerne leur vitesse, leur pression ou bien intensité, leur quantité et/ou leur température.

3. Le procédé selon l'une des revendications 1 et 2, caractérisé en ce que l'eau prélevée à l'extérieur de la zone définie de la masse d'eau et y retournée aussi bien que l'eau amenée et prélevée à l'intérieur de cette zone de la masse d'eau sont conduites dans des cycles séparés en passant par des échangeurs thermiques de la pompe de chaleur, où le transfert de chaleur s'effectue par voie d'un cycle d'un milieu de pompe de chaleur (« frigorigène») conduit en passant par ces échangeurs thermiques, qui comporte un évaporateur, un compresseur, un condenseur et une soupape de détente.

4. Le procédé selon la revendication 1, caractérisé en ce que le réchauffage de l'eau est effectué au moins partiellement par des collecteurs solaires.

5. Le procédé selon l'une des revendications 1 à 4, caractérisé en ce que la quantité d'eau se trouvant dans le cycle pour le réchauffage de la zone définie de la masse d'eau est réglée.

6. Le procédé selon l'une des revendications 1 à 5, caractérisé en ce que de l'eau supplémentaire venant de l'extérieur de la barrière est amenée à la zone définie de la masse d'eau ou bien au cycle d'eau pour le réchauffage de la zone définie de la masse d'eau.

7. Une installation pour le réchauffage d'une zone d'une masse d'eau au moins essentiellement stationnaire, zone définie par des corps creux flottants aussi bien que par des jupes y suspendues, préférablement au moins partiellement constituées en matière plastique, par exemple en polychloroprène, le réchauffage de la zone définie de la masse d'eau s'effectuant au moyen d'une source de chaleur, à laquelle de l'eau venant de la zone définie de la masse d'eau est amenée, cette eau étant retournée à la zone définie de la masse d'eau après avoir passée la source de chaleur en étant réchauffée, préférablement au moyen d'une pompe de chaleur, qui est de plus alimentée d'eau venant de la zone de la masse d'eau à l'extérieur de la zone définie, cette eau étant retournée dans la masse d'eau à l'extérieur de la zone définie de la masse d'eau après avoir passée la pompe de chaleur en soutirant de la chaleur, caractérisée en ce que de l'eau réchauffée est conduite à travers des corps creux supplémentaires (6) ayant une section transversale fermée, préférablement à peu près rectangulaire, arrangés au-dessous de corps creux principaux (5) flottants, en particulier remplis d'air et pourvus d'une section transversale fermée, préférablement à peu près rectangulaire, des orifices de sortie (7) pour l'eau réchauffée (flèche E) et des orifices d'entrée pour l'eau à amener à la source de chaleur (flèche F) étant prévues au côté des corps creux supplémentaires (6) dirigé vers l'intérieur de la zone définie de la masse d'eau, préférablement à l'arête inférieure intérieure des corps creux supplémentaires (6) à peu près rectangulaires, et des jupes étayées ou bien grevées (10) étant fixées aux côtés extérieurs par rapport à la zone définie de la masse d'eau des corps creux supplémentaires (6) aussi bien que des corps creux principaux (5). (Voire en particulier la figure 3)

8. L'installation selon la revendication 7, caractérisée en ce que les orifices de sortie (7) sont prévues à des canaux (8) dirigés obliquement en bas, qui forment en particulier un angle de 30° à 60°, préférablement de 45°, avec l'horizontale.

9. L'installation selon l'une des revendications 7 ou 8, caractérisée en ce qu'il est possible de régler la pression ou bien l'intensité, la vitesse, la quantité et/ou la température de l'eau arrivant en venant de la source de chaleur, in particulier de la pompe de chaleur (47), (flèche D), en particulier dans ou bien pour la région des orifices de sortie (7) de l'eau réchauffée dans les corps creux supplémentaires (6). (Voire la figure 1)

10. L'installation selon l'une des revendications 7 à 9, caractérisée en ce que la partie (3,3') de la barrière (1,2,3,4), barrière qui comporte des corps ou bien éléments creux principaux et supplémentaires, qui est éloignée de la source de chaleur, en particulier du raccord de la pompe de chaleur, est formée à manière d'être mobile, en particulier déplaçable le long des axes de corps creux principaux et supplémentaires (5,6) arrangés le long des grands côtés (1,2) d'une barrière à peu près rectangulaire.

11. L'installation selon l'une des revendications 7 à 10, caractérisée en ce que la barrière comportant des corps ou bien éléments creux principaux et supplémentaires (5,6) peut être séparée par des jupes (25) de matière isolant à la chaleur, en particulier de matière plastique, par exemple de polychloroprène, qui peuvent être suspendues des corps creux opposés (1,2). (Voire la figure 1)

12. L'installation selon l'une des revendications 7 à 11, caractérisée en ce que les corps creux supplémentaires (6) sont pourvus de clapets d'étranglement (24) pour empêcher le passage d'eau.

13. L'installation selon l'une des revendications 7 à 12, caractérisée en ce que le raccord des corps creux supplémentaires (6) à la venue (42) ou bien l'écoulement (42) d'eau chaud dans l'eau stationnaire est formé par des conduits de tuyaux flexibles (21, 22).

14. L'installation selon l'une des revendications 7 à 13, caractérisée en ce que des chambres d'air (5, 13, 15) séparées dans les corps creux principaux sont pourvues d'orifices de ventilation (11) et d'orifices d'évacuation (12). (Voire la figure 3)

15. L'installation selon l'une des revendications 7 à 14, caractérisée en ce que les jupes (10) sont fixées aux corps creux au-dessus de la surface de l'eau (100).

16. L'installation selon l'une des revendications 7 à 15, caractérisée en ce qu'une couverture de la surface de la zone définie de la masse d'eau est prévue, qui peut en particulier être étendue par des moyens électriques.

17. L'installation selon l'une des revendications 7 à 16, caractérisée en ce qu'une pompe de nettoyage est prévue pour aspirer des impuretés de l'eau.
